Europäisches Patentamt

European Patent Office

Office européen des brevets

(19)

(11) **EP 1 116 982 A2**

(12) **EUROPÄISCHE PATENTANMELDUNG**

(43) Veröffentlichungstag:
**18.07.2001 Patentblatt 2001/29**

(51) Int Cl.⁷: **G02B 27/14**

(21) Anmeldenummer: **00126376.3**

(22) Anmeldetag: **02.12.2000**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **11.01.2000 DE 10000665**

(71) Anmelder: **Carl Zeiss**
**89518 Heidenheim (Brenz) (DE)**

(72) Erfinder: **Dreistein, Jörg**
**73434 Aalen (DE)**

(54) **Strahlenteiler**

(57)     Strahlenteiler (1), umfassend eine Mehrzahl an reflektierenden Flächensegmenten (19), durch die ein vorbestimmter Anteil einer auftreffenden Strahlung (3) ausgekoppelt wird, wobei die reflektierenden Flächensegmente winklig zur einfallenden Strahlung angeordnet sind, und als reflektierende Flächensegmente teileflektierende Flächensegmente (5) vorgesehen sind, die parallel zueinander ausgerichtet sind und die in einer senkrecht zur einfallenden Strahlung angeordneten Ebene (4) zueinander seitlich versetzt angeordnet sind.

FIG. 1

EP 1 116 982 A2

**Beschreibung**

Die Erfindung betrifft einen Strahlenteiler gemäß dem Oberbegriff des Patentanspruchs 1.

Aus dem Fachbuch "Bauelemente der Optik" von Naumann und Schröder, erschienen im Hansa-Verlag, sind in der 6. Auflage in Kapitel 58 auf den Seiten 182 bis 184 Strahlenteiler beschrieben. Strahlenteiler sind in geometrische und physikalische Strahlenteiler unterteilbar. Bei geometrischen Strahlenteilern werden die einfallenden Strahlen in Abhängigkeit von dem Auftreffpunkt auf den Strahlenteiler in verschiedene austretende Strahlenbündel aufgeteilt. Als geometrischer Strahlenteiler ist z.B. eine Planplatte gezeigt, auf der streifenförmige Spiegel aufgebracht sind. Diese Planplatte ist unter einem Winkel von 45° zur einfallenden Strahlung angeordnet, so daß die auf die Spiegelbereiche auftreffende und reflektierte Strahlung sich senkrecht zur einfallenden Strahlung ausbreitet, wobei die auf die unverspiegelten Bereiche auftreffende Strahlung die Planplatte, aufgrund der Brechung an der Vorder- und Rückseite, in Abhängigkeit von der optischen Dichte der Planplatte den Strahlteiler in Bezug zur einfallenden Strahlung seitlich versetzt verläßt.

Weiterhin sind Furchenspiegel als geometrische Strahlenteiler bekannt, die auf der dem einfallenden Lichtstrahl zugewandten Seite reflektierende Flächensegmente mit entgegengesetzter Steigung aufweisen, durch die eine gezackte Oberfläche gebildet wird. Die auf diese Oberfläche auftreffende Strahlung wird in zwei verschiedene Raumrichtungen reflektiert, wobei die auf die ersten Spiegelsegmente mit einer ersten Oberflächenneigung auftreffende Strahlung in eine erste Raumrichtung und die auf die zweite Spiegelfläche mit einer entgegengesetzten Steigung bzw. Oberflächenneigung in die zweite durch die Flächensegmente vorgegebene Raumrichtung reflektiert wird. Der Winkel zwischen diesen sich bildenden Strahlenbündeln der reflektierten Strahlung entspricht dem Winkel , in dem die ersten und zweiten Flächensegmente zueinander angeordnet sind.

Weiterhin ist als geometrischer Strahlenteiler ein aus zwei Rhomboidprismen mit entgegengesetzter räumlicher Ausrichtung gebildeter Strahlenteiler bekannt, mittels dessen eine symmetrische Aperturteilung bereitgestellt wird.

Nachteilig ist bei diesen geometrischen Strahlenteilern, daß mittels dieser geometrischer Strahlenteiler keine anteilige Aufteilung der einfallenden Strahlung möglich ist, die einen anteiligen Mittelwert über die Strahlungsintensität repräsentieren.

Die physikalischen Strahlenteiler weisen teilreflektierende Flächen auf, an denen ein vorbestimmter Anteil der einfallenden Strahlung reflektiert wird, wobei der verbleibende Anteil, abgesehen von Absorptionsverlusten, diese teilreflektierende Schicht ungehindert passiert. Diese physikalischen Strahlenteiler sind für eine Auskopplung eines Anteils des einfallenden Lichtes senkrecht zum einfallenden Strahl unter einem Winkel von 45° zur einfallenden Strahlung angeordnet.

Durch die Anordnung der teilreflektierenden Schicht unter einem Winkel von 45° zur einfallenden Strahlung wird von dem Strahlenteiler ein großer axialer Bauraum beansprucht.

Vielfach werden Strahlenteiler in Objektiven, insbesondere für die Halbleiterlithographie, eingesetzt, um aus der Strahlungsintensität der ausgekoppelten Strahlung die Bestrahlungsintensität der transmittierten Strahlung zu bestimmen und somit die Belichtungsintensität des jeweiligen Wafers oder Filmes zu bestimmen.

Bei immer kompakter werdenden Objektiven und gestiegenen Anforderungen an diese Objektive, insbesondere bei den Objektiven für die Halbleiterlithographie, ist jedoch gerade der axiale Baumraum besonders knapp. Andererseits ist es bei der Halbleiterlithographie zwingend erforderlich, die Beleuchtungsdosis bis auf 1 % genau zu bestimmen.

Aus der EP 484 801 A2 ist ein geometrischer Strahlenteiler bekannt, mittels dessen ein Bild in Teilsegmente zerlegt wird, die mittels CCD Arrays, welche als Standardbauteile erhältlich sind, aufgezeichnet werden. Diese aufgezeichneten Bildsegmente werden zu einem Gesamtbild zusammengesetzt. Solch ein geometrischer Strahlenteiler wird insbesondere dann eingesetzt, wenn eine Aufzeichnung des Bildes auf Grund seiner Ausmaße mittels eines als Standardbauteil erhältlichen CCD Arrays oder einer anderen als Standartbauteil erhältlichen Aufnahmeeinheit nicht möglich ist.

Der Erfindung lag die Aufgabe zugrunde einen Strahlenteiler zu schaffen, dessen Erstreckung in axialer Richtung minimiert ist. Weiterhin lag der Erfindung die Aufgabe zugrunde einen Strahlenteiler derart weiterzubilden, daß die Angabe des vorbestimmten ausgekoppelten Anteils mit erhöhter Genauigkeit vorbestimmbar ist.

Die Aufgabe der Erfindung wird durch die im Patentanspruch 1 oder 9 gegebenen Merkmale gelöst. Durch die Maßnahme bei einem eine Mehrzahl an reflektierenden Flächensegmenten aufweisenden Strahlenteiler teilreflektierende Flächensegmente vorzusehen und diese zu einer senkrecht zum einfallenden Lichtstrahl angeordneten Ebene gegeneinander seitlich versetzt anzuordnen, wobei die teilreflektierenden Flächensegmente zueinander parallel angeordnet sind, ist ein in axialer Richtung extrem kurzbauender Strahlenteiler geschaffen, durch den ein vorbestimmter Anteil der auf den Strahlenteiler auftreffenden Strahlung senkrecht zur einfallenden Strahlung ausgekoppelt wird. Bei senkrechter Auskopplung ist es möglich mittels eines parallel zum Strahlengang angeordneten Detektors die Intensität der ausgekoppelten Strahlung zu detektieren.

Es hat sich als vorteilhaft herausgestellt, die teilreflektierenden Flächensegmente mit einem konstanten Abstand, der nicht Null ist, parallel zueinander anzuordnen. Vorzugsweise ist der Abstand derart gewählt, daß die gesamte auf den Strahlenteiler auftreffende Strahlung jeweils eine teilreflektierende Fläche passieren muß oder an derselben reflektiert wird, wobei sich die teilreflektierenden Flächensegmente nur minimal oder nicht überlappen.

Es hat sich als vorteilhaft herausgestellt, daß die teilreflektierenden Flächensegmente von planen transparenten Trägersegmenten getragen werden, die unter einem Winkel von 45° zur einfallenden Strahlung angeordnet sind. Die übrigen nicht in einem Winkel von 45° zur einfallenden Strahlung angeordneten Begrenzugsflächen der transparenten Trägersegmente sind vorzugsweise senkecht zur einfallenden Strahlung angeordnet. Dadurch wird gewährleistet, daß die auf den Strahlenteiler auftreffende Strahlung bei Transmission die teilreflektierenden Fläche des Strahlenteiler geradlinig passiert. Trifft die einfallende Strahlung unter einem kleinen Winkel auf den Strahlenteiler auf, so kann die daraus resultierende Abweichung vom geradlinigen Verlauf in den meisten Anwendungsfällen toleriert werden.

Solche planen transparente Trägersegmente, die mit teilreflektierden Flächensegmente versehen sind, sind insbesondere durch Bedampfen eines transparenten Trägers, wie z.B. ein Glasträger, und anschließendem Schneidevorgang kostengünstig herstellbar.

Es hat sich weiterhin als vorteilhaft herausgestellt teilreflektierende Flächensegmente in einem transparenten Träger z.B. durch einen Ätzvorgang einzuarbeiten bzw. anzubringen. Mittels bekanntem Ätzverfahren sind solche teilreflektierenden Schichten, die in einem transparenten Träger angeordnet sind, kostengünstig herstellbar.

In einigen Anwendungsfällen hat es sich als vorteilhaft herausgestellt auf einem transparenten Träger, vorzugsweise planen Träger teilreflektierende Flächensegmente abzuscheiden. Es ist insbesondere mittels einer Lackbeschichtung, die in Teilbereichen durch Belichtung ausgehärtet wird, solche teilreflektierenden Flächensegmente auszubilden. Bei entsprechender Auswahl des Lackes ist es möglich, daß die ausgebildeten teilreflektierenden Flächensegmente nur für bestimmte Wellenlängen teilreflektierend sind und im übrigen Wellenlängenbereich transmittiert sind.

In einer weiteren vorteilhaften Ausführungsform ist vorgesehen, einen transparenten Träger auf der der einfallenden Strahlung zugewandten Seite mit einer Treppenstruktur zu versehen. Diese Treppenstruktur weist erste Flächensegmente, die unter einem Winkel von 45° zur einfallenden Strahlung angeordnet sind, auf. Diese ersten Flächensegmente sind über zweite Flächensegmente, die parallel zur einfallenden Strahlung angeordnet sind, miteinander verbunden, wobei zumindestens die ersten Flächensegmente teilreflektierend sind. Dem mit einer Treppenstruktur versehenen tansparenten Träger ist ein Deckträger zugeordnen, der auf der einfallenden Strahlung abgewandten Seite mit einer gegensinnig ausgebildeten Treppenstruktur versehen ist. Bei solch einer Anordnung können die teilreflektierenden Flächensegmente sowohl auf dem Deckträger, als auch auf dem Glasträger angeordnet sein. Der Deckträger ist mit dem transparenten Träger vorzugsweise formschlüssig verbunden, so daß ein durch diese beiden Elemente gebildeter Strahlenteiler auf der der einfallenden Strahlung zugewandten Seite und auf der der einfallenden Strahlung abgewandten Seite Oberflächen aufweist, die vorzugsweise senkrecht zur einfallenden Strahlung angeordnet sind, so daß die einfallende Strahlung an diesen Oberflächen nicht gebeugt wird.

Bei planen Oberflächen des Strahlenteilers können diese, insbesondere vor der Montage, leicht gereinigt werden. Auch sind solche Strahlenteiler stabiler und können aufgrund ihrer geometrischen Form leichter verpackt werden.

Es hat sich als vorteilhaft herausgestellt, die senkrecht zur einfallenden Strahlung angeordneten Flächen mit einer Entspiegelung zu versehen. Dadurch wird eine nicht gewollte Reflektion von der auf diese Flächen auftreffenden Strahlung verhindert bzw. zumindestens verringert, wodurch die Strahlungsverluste verringert werden.

Als besonders vorteilhafte Ausführungsform hat es sich herausgestellt die teilreflektierenden Flächensegmente koaxial zu einem Fokus anzuordnen, der außerhalb des Strahls der einfallenden Strahlung und in radialer Fortsetzug zum Strahlenteiler angeordnet ist. Diese Anordnung ist insbesondere dann vorteilhaft, wenn nur ein sehr geringer Teil der einfallenden Strahlung für die Bestimmung der Strahlungsintensität ausgekoppelt wird. Es kann dadurch eine Erhöhung der Meßgenauigkeit erreicht werden, da durch die Fokussierung gewährleistet wird, daß die ausgekoppelte Strahlung von dem Detektor vollständig erfaßt wird. Die Strahlungsintensität im Fokus ist somit recht hoch, so daß Störungen, wie z.B. Strahlung der Umgebung, nicht so stark ins Gewicht fallen. Meßungenauigkeiten des Detektors fallen nicht so stark ins Gewicht. Wird nur ein geringer Anteil der Eingangsintensität der einfallenden Strahlung für die Bestimmung der Beleuchtungsintensität benötigt, so kann die Eingangsintensität für eine benötigte resultierende Beleuchtungsintensität dementsprechend gering gehalten werden, was sich vorteilhaft auf die Energiebilanz auswirkt. Hinzu kommt, daß ein eine kleine Detektorfläche aufweisender Detektor einsetzbar ist. Auch muß keine zur Bündelung des ausgekoppelten Lichtes separate Optik vorgesehen werden, was sich vorteilhaft auf die Kosten auswirkt.

Durch die Maßnahme, einen Träger mit einer Microstruktur zu versehen, die Periodizitätsintervalle aufweist, ist ein weiterer in axialer Richtung kurzbauender Strahlenteiler geschaffen. In Abhängigkeit von dem Verhältnis der gewählten Strukturgröße der Microstruktur zu der für die Beleuchtung eingesetzten Wellenlänge können Beugungserscheinungen gezielt für eine Auskopplung eines vorbestimmten Anteiles des auf den Strahlenteiler auftreffenden Lichtes gezielt ausgekoppelt und für eine Bestimmung der transmittierenden Lichtintensität herangezogen werden.

Es hat sich als vorteilhaft herausgestellt, als Träger eine Platte mit senkrecht zur einfallenden Strahlung ausgerichteten Oberflächen vorzusehen, wobei die Microstruktur auf der Vorderseite der Platte angeordnet ist.

Es hat sich als vorteilhaft herausgestellt, die Periodizitätsintervalle der Microstruktur derart zu wählen, daß das auf Grund dieser Periodizitätsintervalle resultierende Beugungsbild ein Beugungsmaximum höherer Ordnung aufweist, dessen Strahlung unter einem Winkel auf die der einfallenden Strahlung abgewandten Oberfläche der Platte auftrifft, bei dem Totalreflektion auftritt und somit die Strahlung des ersten Beugungsmaximums unter Totalreflektion zur seitlichen Begrenzungskante der Platte geleitet wird und dort austritt. Die Platte fungiert somit als Strahlenleiter. Eine Beugungsordnung möglichst geringer Ordnung ist prädestiniert, da es noch eine relativ hohe Intensität aufweist, die eine sehr exakte Bestimmung der transmittierenden Strahlungsintensität ermöglicht. Es könnte jedoch auch die Strahlung einer höheren Beugungsordnung ausgekoppelt werden, wobei damit jedoch höhere Strahlungsverluste in Kauf genommen werden.

Durch Sensierung der aus dieser Plattenkante austretenden Strahlungsintensität ist die Intensität der einfallenden bzw. der die dem Strahlenteiler passierenden Strahlung bestimmbar.

Weitere vorteilhafte Maßnahmen sind in weiteren Unteransprüchen beschrieben.

Anhand einiger Ausführungsbeispiele wird im Folgenden die Erfindung näher beschrieben.

Es zeigen:

Figur 1 Strahlenteiler mit parallelogrammförmigen Teilersegmenten;

Figur 2 graphische Darstellung der Strahlungsausbreitung;

Figur 3 Strahlenteiler umfassend eine Treppenstruktur;

Figur 4 Strahlenteiler mit zu einem Fokus koaxial angeordneten teilreflektierenden Flächen;

Figur 5 Strahlenteiler mit Microstruktur auf der Vorderseite; und

Figur 6 vergrößerte Darstellung einer Microstruktur

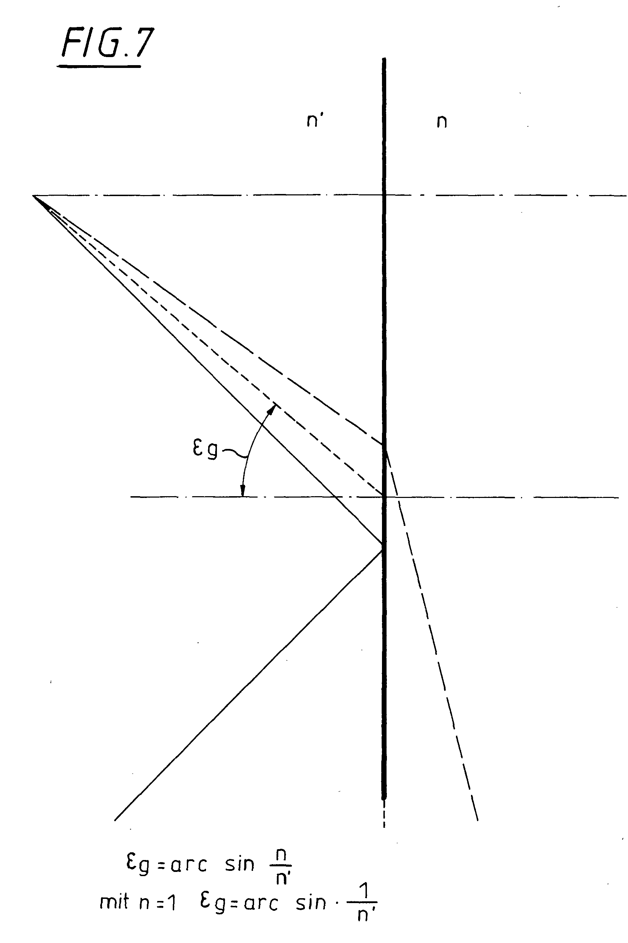

Figur 7 Grenzwinkel beim Übergang von Glas in Luft.

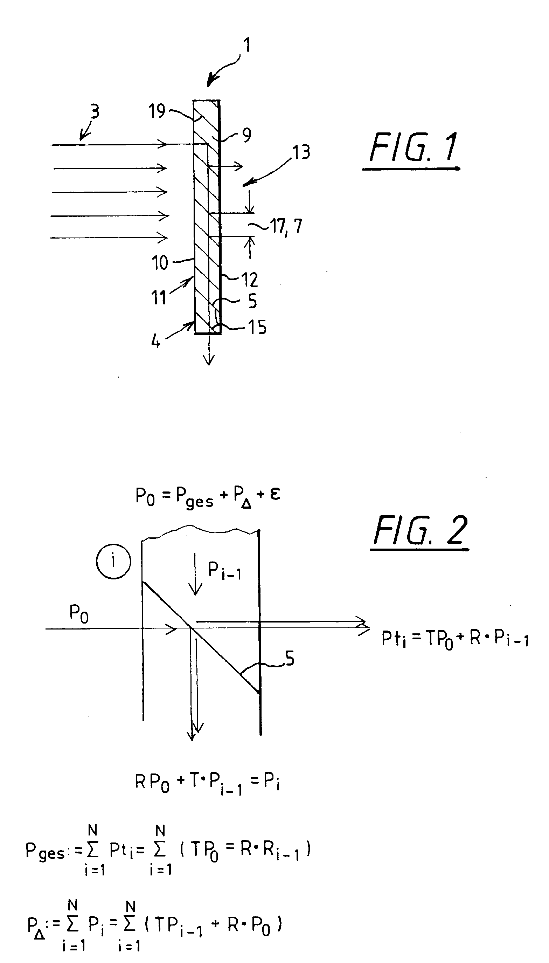

Der in Figur 1 dargestellte Strahlenteiler 1 weist teilreflektierende Flächensegmente 5 auf, die unter einem Winkel von 45° zur einfallenden Strahlung 3 angeordnet sind. Diese teilreflektierenden Flächensegmente 5 sind zu einer zur einfallenden Strahlung 3 senkrecht angeordneten Ebene 4 gegeneinander seitlich versetzt angeordnet, wobei die teilreflektierenden Flächensegmente 5 ihrerseits parallel zueinander mit einem konstanten Abstand 7 angeordnet sind. Diese teilreflektierenden Flächensegmente 5 werden von planen transparenten Trägersegmenten 9 getragen. Diese transparenten Trägersegmente 9 weisen auf der der einfallenden Strahlung 3 zugewandten Seite 10 und auf der der einfallenden Strahlung 3 abgewandten Seite 12 jeweils eine zur einfallenden Strahlung 3 senkrecht verlaufende Begrenzungsflächen 11, 13 auf. Zur Verringerung von Strahlungsverlusten durch Streuung können diese Begrenzungsflächen 11, 13 mit einer Entspiegelung versehen sein.

Zur Herstellung solch eines Strahlenteilers 1 können bereits parallelogrammförmig ausgebildete transparente Trägersegmente 9, zum Beispiel mittels Bedampfung mit einer teilreflektierenden Schicht 19, versehen werden, durch die die teilreflektierenden Flächensegmente 5 gebildet werden. Diese teilreflektierende Schicht 19 kann auch auf einen transparenten Träger 21, wie z.B. einer Glasplatte, aufgebracht werden, aus der anschließend die transparenten Trägersegmente 9 zugeschnitten werden. Auch kann vorgesehen sein, daß die transparenten Trägersegmente 9, sowohl auf einer Vorder-, als auch auf einer Rückseite, mit einer teilreflektierenden Schicht 19 versehen sind. Diese transparenten Trägersegmente 9 werden an den mit der teilreflektierenden Schicht 19 versehenen und ggf., wenn nur eine Oberfläche mit einer teilreflektierenden Schicht versehen ist, mit der dazu parallelen Oberfläche 15 des darauf folgenden transparenten Trägersegmentes 9 zusammengefügt, wobei durch die der einfallenden Strahlung 3 zugewandten und abgewandten Begrenzungsflächen 11, 13 ebene Oberflächen gebildet werden.

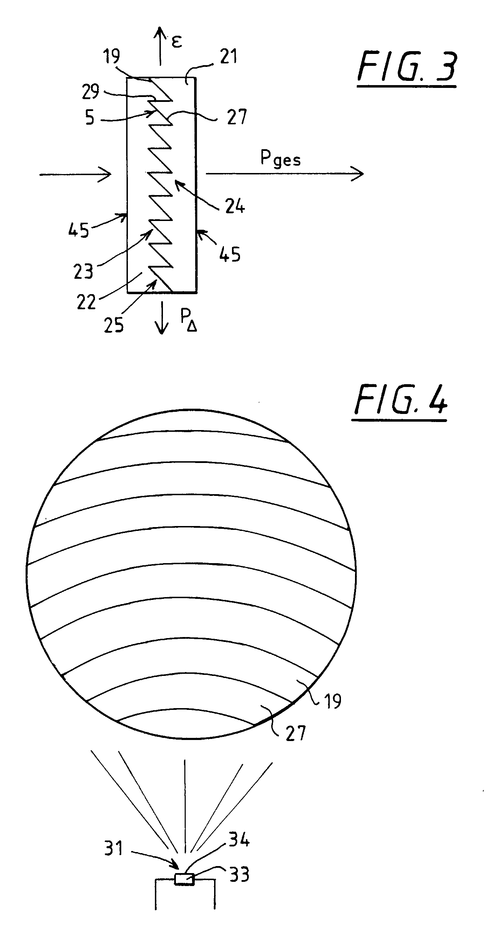

Anhand von Figur 2 wird die auf die teilreflektierenden Flächensegmente 5 zurückgehende Intensitätsaufteilung der Strahlung näher erläutert. Strahlung 3 mit Intensität Po trifft auf das i-te teilreflektierende Flächensegment 5, wobei der Anteil R der einfallenden Strahlung 3 an derselben reflektiert wird und der Anteil T transmittiert wird. Da die teilreflektierenden Flächensegmente 5 parallel mit dem Abstand 17 zueinander versetzt angeordnet sind, trifft die im Strahlenteiler 1 verbleibende Strahlung R*Po auf die Rückseite der nächsten teilreflektierenden Schicht 5, der eine Numerierung i + 1 zugeordnet ist. Von der Intensität dieser Strahlung wird der Anteil R reflektiert und tritt gemeinsam mit der an diesem teilreflektierenden Flächensegment 5 transmittierenden Strahlungsintensität T*Po aus dem Strahlungsteiler 1 heraus. Der verbleibende Anteil T*Pi transmittiert und wird auf den an diesem teilreflektierenden Flächensegment 5, mit Nummerierung i+1, reflektierten Strahlungsanteil R * Po der einfallenden Strahlung 3 aufsummiert. Durch Summierung über die Anzahl der teilreflektierten Flächensegmente von 1 bis N erhält man den Anteil der transmittierten Strahlung. Weiterhin erhält man durch Summierung über die Anzahl N der teilreflektierenden Flächensegmente 5 den Anteil der einfallenden Strahlung, der sich in dem Strahlenteiler senkrecht zur einfallenden Strahlung ausbreitet und seitlich, senkrecht zur einfallenden Strahlung, den Strahlenteiler verläßt. Der Anteil der ausgekoppelten Strahlung ist mit $P_\Delta$ (siehe Fig. 3) bezeichnet.

Durch eine Eichmessung kann der Anteil ε an Streuverlusten ermittelt werden, der von der Anzahl N der teilreflektierenden Flächensegmenten 5 abhängt.

Der in Figur 3 dargestellte Strahlenteiler 1 unterscheidet sich lediglich im Aufbau der Trägerstruktur, auf denen die teilreflektierenden Flächensegmente 5 angebracht sind, wobei die teilreflektierenden Flächensegmente 5 aus Sicht der einfallenden Strahlung 3 in gleicher Weise angeordnet sind. Diese teilreflektierenden Flächensegmente 5 werden jedoch von einem Glasträger 21 getragen, der auf der der einfallenden Strahlung 3 zugewandten Seite eine Treppenstruktur 23 aufweist, die Oberflächensegmente 25 mit zwei Orientierungen aufweist. Erste Flächensegmente 27 sind in einem Winkel von 45° zur einfallenden Strahlung 3 angeordnet, wobei zweite Flächensegmente 29, über die die ersten Flächensegmente 27 miteinander verbunden sind, eine Treppenstruktur 23 bildend, parallel zur einfallenden Strahlung 3 ausgerichtet sind. Die teilreflektierenden Flächensegmente 5 werden von den ersten Flächensegmenten 27 getragen.

In dem dargestellten Ausführungsbeispiel ist dem transparenten Träger 21 ein Deckträger 22 zugeordnet, der auf der der einfallenden Strahlung 3 abgewandten Seite eine gegensinnig zur Treppenstruktur 23 des transparenten Trägers 21 ausgebildete Treppenstruktur 24 aufweist, wobei ebenfalls die ersten Flächensegmente 27 mit einer teilreflektierenden Schicht 19 versehen sein können. Solch eine Schicht kann durch Aufdampfen aufgebracht werden.

Durch Zusammenfügen von transparentem Deckträger 22 und Träger 21 wird eine parallele Oberflächen aufweisende Platte 43 gebildet, in der eine teilreflektierende Flächensegmente 5 umfassende Schicht integriert ist. Es kann vorgesehen sein, daß Deckträger 22 und Glasträger 21 mittels einer Kittverbindung zusammengefügt werden. Solch eine integrierte teilreflektierende Schicht kann auch durch ein Ätzverfahren in einem transparentem Träger ausgebildet werden.

Auch bei dieser Ausführungsform können Streuverluste durch Vorsehen einer Entspiegelung auf den senkrecht zur einfallenden Strahlung 3 angeordneten Oberfläche 45, verringert werden.

Das in Figur 4 gezeigte Ausführungsbeispiel ist aus Blickrichtung der einfallenden Strahlung 3 dargestellt. Die unter einem Winkel von 45° zur einfallenden Strahlung 3 angeordneten teilreflektierenden Flächensegmente 5 sind zur Fokussierung des auszukoppelnden Anteils $P_\Delta$ koaxial zu einem Fokus 31, der außerhalb des Strahlenganges der einfallenden Strahlung 3 angeordnet ist, angeordnet. Im Fokus 31 ist ein Detektor 33 zur Detektion der Intensität des ausgekoppelten Anteils $P_\Delta$ der einfallenden Strahlung 3 vorgesehen. Diese Strahlung wird, bis auf minimale Streuverluste, vollständig durch Detektor erfaßt. Zur Sensierung dieser Intensität ist ein Detektor 33, der eine geringe Ausmaße aufweisende Detektorfläche 34 aufweist, ausreichend.

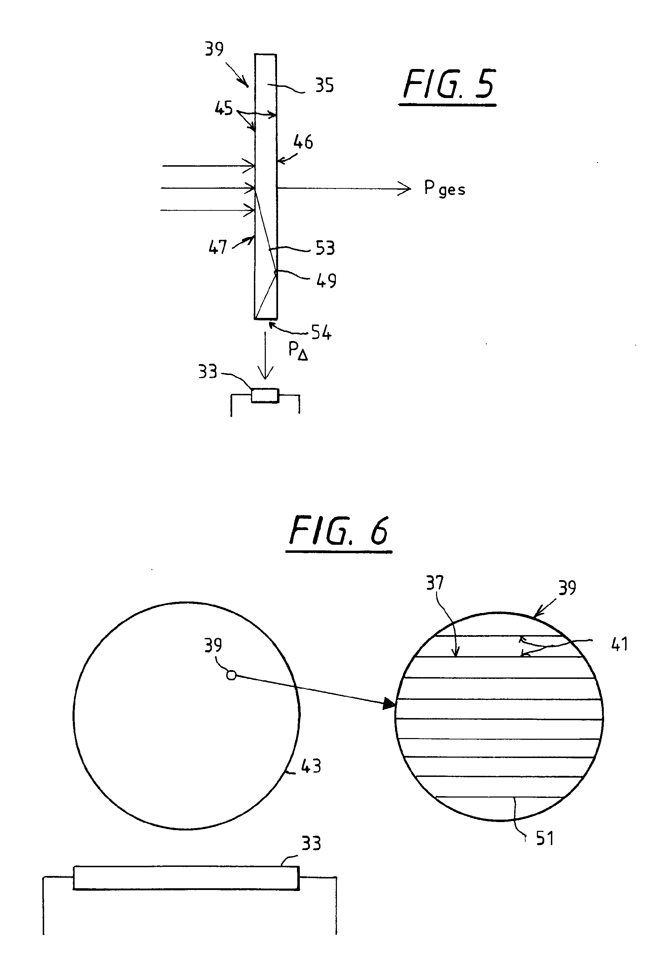

Anhand von Figur 5 und 6 wird ein Ausführungsbeispiel eines Strahlenteilers 1 beschrieben, der eine mit einer Microstruktur 39 als periodische Struktur 37 versehene Oberfläche 45 aufweist. Die Periodizitätsintervalle 41 der Microstruktur 39 sind in Abhängigkeit von der Wellenlänge, bei der der Strahlenteiler eingesetzt werden soll gewählt, so daß durch das Vorgesehenen der Microstruktur 39 ein Beugungsbild resultiert. Diese Microstruktur 39 ist auf einer Platte 43, z.B. mittels einer Lackbeschichtung oder durch ein Ätzverfahren, aufgebracht. Diese Microstruktur weist parallel zueinander und senkrecht zur einfallenden Strahlung 3 ausgerichtete Oberflächen 46, 47 auf, wobei ein Beugungsmaxima höherer Ordnung unter einem derart flachen Winkel auf die der einfallenden Strahlung 3 abgewandten Seite angeordnete Oberfläche 46 trifft, so daß diese Strahlung unter Totalreflektion in der Platte 43, die somit als Lichtleiter 49 wirksam ist, verbleibt. Die Endfläche 54, insbesondere deren Erstreckung, ist auf den eingesetzten Detektor abgestimmt, wodurch eine Fokusierungsoptik entfällt.

In Figur 6 ist beispielshaft eine mögliche Microstruktur 39, die parallel zueinander angeordnete Linien 51, die mit einem Abstand 41 zueinander angeordnet sind, stark vergrößert dargestellt. Dieser Abstand 41 ist gleichzeitig das Periodizitätsintervall 41 der periodischen Struktur 37. Damit Beugungserscheinungen auftreten, muß die Periodizität der Microstruktur 39 ungefähr im Bereich der Wellenlänge der einfallenden Strahlung gewählt werden.

Für den senkrechten Einfall gilt:

$$g = \frac{\lambda}{n} \cdot \cos\alpha$$

, wobei

  $g$ = Gitterkonstante
  $\lambda$ = Wellenlänge in Luft
  $n$ = Brechindex von Glas
  $\cos\alpha$ = Beugungswinkel im Gitterträger

Bei Verwendung einer Strahlung der Wellenlänge 193 nm und bei Verwendung eines Gitters mit 1000 Linien pro Millimeter ergeben sich die in Tabelle 1 aufgeführten Winkel der zugeordneten Beugungsordnungen.

Der Grenzwinkel Eg für Totalreflektion ergibt sich aus:

$$Eg = \arcsin\left(\frac{n}{n'}\right)$$

mit

n = 1

$$Eg = \arcsin \frac{1}{n'}$$

wobei n der Berechnungsindex von Luft ist und n' der Berechnungsindex des verwendeten Trägers, hier Quarzglas mit n' = 1,6, ist.

Demzufolge liegt bei diesem Ausführungsbeispiel der Grenzwinkel Eg bei 38,68°, bei der Beugung im Glas. Somit wird die 6. Beugungsordnung aufgrund der Mikrostruktur mittels Totalreflektion ausgekoppelt.

Es kann auch noch vorgesehen werden den Beugungsordnungen eine Vorzugsrichtung durch eine spezielle Formausgestaltung der einzelnen Gitterlinien, z.B. Dreiecksfurchen, aufzuprägen, so daß bereits niedrigere Beugungsordnungen mittels Totalreflektion ausgekoppelt werden.

Es kann auch vorgesehen sein eine Platte nur auf einem Teilbereich mit einer Microstruktur zu versehen.

Tabelle 1:

| Beugungsordnung | Winkel in ° |
|---|---|
| 1 | 6,9 |
| 2 | 13,9 |
| 3 | 21,2 |
| 4 | 28,8 |
| 5 | 37,1 |
| 6 | 46,3 |

Für die ausgekoppelte Leistung gilt:

$$P_n = R \cdot P_0 \cdot \frac{1 - T^n}{1 - T}$$

Bezugszeichenliste:

(1)   Strahlenteiler
(3)   einfallende Strahlung
(4)   Ebene
(5)   teilreflektierendes Flächensegment
(7)   Abstand
(9)   transparentes Trägersegment
(10)  zugewandte Seite
(11)  Lichtstrahl, zugewandte Begrenzungsfläche
(12)  abgewandte Seite
(13)  Strahlung, abgewandte Begrenzungsoberfläche
(15)  planparallele Oberfläche
(17)  Abstand
(19)  teilreflektierende Schicht
(21)  transparenter Träger
(22)  Deckträger
(23)  Treppenstruktur
(24)  gegensinnige Treppenstruktur
(25)  Oberflächensegmente
(27)  erstes Flächensegment
(29)  zweites Flächensegment
(31)  Fokus
(33)  Detektor
(34)  Detektorfläche
(35)  Träger
(37)  periodische Struktur
(39)  Mikrostruktur
(41)  Periodizitätsintervall
(43)  Platte
(45)  senkrechte Oberfläche
(46)  Oberfläche (Rückseite)
(47)  Vorderseite
(49)  Strahlenleiter
(51)  Linien
(53)  Winkel
(54)  Endfläche

**Patentansprüche**

1. Strahlenteiler, umfassend eine Mehrzahl an reflektierenden Flächensegmenten, durch die ein vorbestimmter Anteil einer auftreffenden Strahlung ausgekoppelt wird, wobei die reflektierende Flächensegmente winklig zur einfallenden Strahlung angeordnet sind, dadurch gekennzeichnet, daß als reflektierende Flächensegmente teileflektierende Flächensegmente (5) vorgesehen sind, die parallel zueinander ausgerichtet sind und die in einer senkrecht zur einfallenden Strahlung (3) angeordneten Ebene (4) zueinander seitlich versetzt angeordnet sind.

2. Strahlenteiler nach Anspruch 1, dadurch gekennzeichnet, daß
die die teilreflektierenden Flächensegmente (5) mit einem konstanten Abstand (7), der nicht Null ist, parallel zueinander angeordnet sind.

3. Strahlenteiler nach Anspruch 1, dadurch gekennzeichnet, daß die teilreflektierenden Flächensegmente (5) in einem Winkel von 45° zur einfallenden Strahlung (3) angeordnet sind.

4. Strahlenteiler nach mindestens einem der Ansprüche 1 - 3, dadurch gekennzeichnet, daß die teilreflektierenden Flächensegmente (9) in einem transparenten Träger (21) vorzugsweise durch Ätzen, eingebracht sind.

5. Strahlenteiler nach mindestens einem der Ansprüche 1 - 3, dadurch gekennzeichnet,
daß die teilreflektierenden Flächensegmente (9) auf einem transparenten Träger, vorzugsweise planen Träger (21), abgeschieden bzw. aufgebracht worden sind.

6. Strahlenteiler nach Anspruch 1 oder 3, dadurch gekennzeichnet, daß
die teilreflektierten Flächensegmente (5) von planen transparenten Trägersegmenten (9) getragen werden, die unter einem Winkel von 45° zur einfallenden Strahlung (3) angeordnet sind und die auf der der einfallender Strahlung (3) zugewandten Seite (10) und abgewandten Seite (12) senkrecht zu der Strahlung (3) verlaufende Begrenzungskanten (11, 13) aufweisen.

7. Strahlenteiler nach Anspruch 1 oder 6, dadurch gekennzeichnet, daß
die transparente Trägersegmente (9) zwei parallele Oberflächen (15) mit einem Abstand (17) aufweisen, wobei zumindestens eine dieser Oberfläche (15) mit einer teilreflektierenden Schicht (19) ein teilreflektierendes Flächensegment (5) bildend, versehen ist, und die transparente Trägersegmente (9) über die gesamte Erstreckung dieser Oberfläche (15) miteinander verbunden sind.

8. Strahlenteiler nach Anspruch 1, dadurch gekennzeichnet, daß
die teilreflektierenden Flächensegmente (5) von einem transparenten Träger (21), der eine mit einer Treppenstruktur (23) versehene Oberfläche (25) aufweist, die unter einem Winkel von 45° zur einfallenden Strahlung angeordneten ersten Flächensegmente (27) aufweist und die erste Flächensegmente (27) jeweils verbindende zweite Flächensegmente (29) aufweist, die parallel zur einfallenden Strahlung (3) angeordnet sind.

9. Strahlenteiler nach Anspruch 6, dadurch gekennzeichnet, daß der transparente Träger (21) mit einem transparenten Deckträger (22) verbunden ist, der auf der dem Glasträger (21) zugewandten Seite mit einer gegensinnig zur Treppenstruktur (23) des transparenten Trägers ausgebildeten Treppenstruktur (24) versehen ist, die seinerseits ebenfalls mit teilreflektierenden Flächensegmenten (5) versehen sein kann.

10. Strahlenteiler nach zumindest einem der vorangegangenen Ansprüche,
gekennzeichnet dadurch, daß
die teilreflektierenden Flächensegmente (5) koaxial zu einem Fokus (31) angeordnet sind, der außerhalb des Strahls der einfallenden Strahlung (3) angeordnet ist.

11. Strahlenteiler, nach mindestens einem der vorangegangenen Ansprüchen, der einen mit einer periodischen Struktur versehenen Träger aufweist, dadurch gekennzeichnet, daß die periodische Struktur (37) eine Microstruktur (39) mit einem Periodizitätsintervall (41) aufweist.

12. Strahlenteiler nach Anspruch 11, dadurch gekennzeichnet, daß die Mikrostruktur (39) von einem Träger (35) in Form einer Platte (43) mit senkrecht zur einfallenden Strahlung (3) ausgerichteten Oberfläche (45) getragen wird, wobei die Mikrostruktur auf der der einfallenden Strahlung (3) zugewandten Seite (47) aufgebracht ist.

13. Strahlenteiler nach Anspruch 11, dadurch gekennzeichnet, daß
die Strahlung eines Beugungsmaximums höherer Ordnung unter einem Winkel auf die der einfallenden Strahlung (3) abgewandte Oberfläche (46) der Platte (43) auftrifft, bei dem Totalreflektion auftrifft und die Platte (43) somit als Strahlenleiter (49) fungiert.

14. Strahlenteiler nach Anspruch 11, dadurch gekennzeichnet, daß
der Träger (35) eine Platte (43) mit senkrecht zum einfallenden Lichtstrahl ausgerichteten Oberfläche (45) ist, die auf der dem einfallenden Lichtstrahl (3) abgewandten Oberfläche (46) mit einer Microstruktur (39) versehen ist.

15. Strahlenteiler nach Anspruch 11, gekennzeichnet dadurch, daß
die Microstruktur (39) parallel zueinander angeordnete Linien (51) aufweist, die parallel zur Detektorfläche (34) ausgerichtet sind.

16. Strahlenteiler nach Anspruch 11, dadurch gekennzeichnet, daß durch den Abstand der Linien (51) das Periodizitätsintervalls (41) bestimmt ist.

17. Strahlenteiler nach Anspruch 4 oder 6, 7, 11 oder 12 dadurch gekennzeichnet, daß zumindest eine Fläche(11,13,45) der senkrecht zur einfallenden Strahlung(3) verlaufenden Flächen(11,13,45) mit einer Entspiegelung versehen ist.

*FIG. 1*

$$P_0 = P_{ges} + P_\Delta + \varepsilon$$

*FIG. 2*

$$Pt_i = TP_0 + R \cdot P_{i-1}$$

$$R P_0 + T \cdot P_{i-1} = P_i$$

$$P_{ges} := \sum_{i=1}^{N} Pt_i = \sum_{i=1}^{N} (TP_0 = R \cdot R_{i-1})$$

$$P_\Delta := \sum_{i=1}^{N} P_i = \sum_{i=1}^{N} (TP_{i-1} + R \cdot P_0)$$

EP 1 116 982 A2

FIG. 3

FIG. 4

_FIG. 5_

_FIG. 6_

## FIG.7

$$\varepsilon g = arc \ sin \ \frac{n}{n'}$$

$$mit \ n = 1 \quad \varepsilon g = arc \ sin \cdot \frac{1}{n'}$$